# EUROPEAN PATENT SPECIFICATION

(11) **EP 3 237 233 B1**
(45) Date of publication and mention of the grant of the patent: **23.10.2019**
(21) Application number: 15823804.8
(22) Date of filing: 21.12.2015
(51) Int. Cl.: B60C 11/03, B60C 9/06

(54) **MOTORCYCLE TYRE**
MOTORRADREIFEN
PNEUMATIQUE DE MOTOCYCLETTE

(30) Priority: 24.12.2014 IT RM20140752
(43) Date of publication of application: 01.11.2017
(73) Proprietor: Pirelli Tyre S.p.A., 20126 Milano (IT)
(72) Inventor: MISANI, Pierangelo, 20126 Milano (IT); MARIANI, Mario, 20126 Milano (IT); MONZANI, Alessandro, 41261 Subang (ID)
(74) Representative: Fabiano, Piero
(86) International application number: PCT/IB2015/059834
(87) International publication number: WO 2016/103151

(56) References cited:
- WO-A1-2010/073279
- WO-A1-2011/012980
- US-A- 4 112 994

## Description

### Field of the invention

The present invention refers to a motorcycle tyre. In particular, the present invention refers to a tyre intended to be fitted to wheels of motorcycles with small/medium displacement (for example 150 - 250 cm³), and/or with low and medium power (for example 40-80 hp) generally used in geographic areas characterized by tropical hot climates and by road often being irregular and bumpy.

### Background art

The following documents describe some motorcycle tyres: US4112994, EP 1884377 and WO2011/012980.

### Summary of the invention

In recent years, it is being observed a steadily increasing diffusion of motorcycles with small or medium displacement and/or with low-medium power in so-called emerging markets localized in tropical or sub-tropical geographic areas, with hot climates characterized by abundant precipitations.

In these geographic areas, roads can be uneven and irregular, for example characterized by holes, hollow regions and protrusion.

For meeting these needs, the tyres intended for this use are normally required to have optimal qualities of drainage and strength, also taking into account the overload that motorcycles can be subjected to. The Applicant has observed that, conventionally, for facing strength issues, tyres have been used having a carcass structure provided with at least two carcass plies radially superimposed, wherein the reinforcing elements of the radially inner ply are oppositely inclined relative to the reinforcing elements of the ply located above, the so-called carcass structure with crossed plies ("cross ply" or "X ply"). The Applicant has observed that in general the tyres provided with the aforementioned carcass structure have a high structural rigidity that results in a footprint to the ground which is long and narrow. According to the Applicant, an excessive length of the footprint area is not convenient, since it can cause local losses of contact pressure and/or an irregular wear.

Always according to the Applicant, a too narrow footprint area does not allow an adequate transmission on the ground of the traction torque, to the detriment of the tyre performance above all while running in straight stretch.

Furthermore, a too narrow footprint area tends to stress more the compound of the tread, worsening the behavior thereof.

Finally, a too narrow footprint area tends to transmit the longitudinal stresses to the frame, what should be avoided, above all in motorcycles with small and medium displacement, wherein the transmission of stresses to the frame is filtered and/or dampened substantially only by the flexibility of the fork.

For avoiding these drawbacks it is known to make conventional tyres provided with many radial and/or longitudinal grooves, thus however reducing the contact between the compound and the asphalt when a higher performance in terms of grip and sporty driving is required. Due to the increased speed of motorcycles, even of those with low displacement, and to the performances required to the tyre, it has, therefore, been necessary to make a new kind of structure able to ensure performance.

Therefore, radial tyres have been introduced, which are provided with a reinforcing structure known as belt, specialized in containing the diameter of the tyre, while inflated and in operation, and in particular in containing the centrifugal forces.

The introduction of two structures, radial carcass and belt, that even if cooperating with each other are specialized in containing two different types of deformation, made it possible to increase the performance in terms of thrust and resistance to the required increased speed.

The Applicant has anyway observed that the tyres provided with radial carcass structure and belt structure can be not sufficiently robust in operating conditions with raveled and irregular roads and/or with highly loaded motorcycles.

The Applicant has furthermore observed that the tyres provided with radial carcass and belt can be complex to manufacture and not suitable to any type of production plant.

The Applicant has thus faced the problem of providing tyres for motorcycles which are structurally simple, have optimal features of drainage and strength, therefore being suitable to be used also in conditions of use with raveled and irregular roads and highly loaded motorcycles, and at the same time do not have the drawbacks of the tyres provided with a conventional structure.

The Applicant has furthermore faced the problem of providing tyres for motorcycles which are structurally simple, have optimal features of drainage and strength, and at the same time perform well in terms of grip and tyre behavior, so as to allow a sportier driving.

The Applicant has found that this problem can be solved by the use of a tyre having a conventional carcass structure and a tread band with grooves at least partially arranged according to the orientation of the reinforcing elements of the underlying carcass plies.

In a first aspect, the invention refers to a motorcycles tyre, comprising:
- a carcass structure comprising at least one first and at least one second carcass ply radially superimposed, each one made of elastomeric material and comprising a plurality of reinforcing elements arranged parallel to one another; said at least one first and at least one second carcass ply being mutually crossed so that the reinforcing elements of a first ply are inclined relative to the reinforcing elements of the second carcass ply and to the equatorial plane;
- a tread band arranged radially externally to said carcass structure; said tread band comprising a plurality of grooves;
- said tread band having a void/solid ratio greater than of the 4%;
- said tread band comprising a module replicated along a direction of circumferential development of the tyre comprising:
   - a first pair of first grooves, oppositely inclined relative to the equatorial plane of the tyre;
   - a second pair of second grooves oppositely inclined relative to the equatorial plane of the tyre;
   - the first and the second grooves of the first and of the second pair being arranged so as to form a central annular portion across the equatorial plane having a void/solid ratio smaller than 0,1%;
   - the first pair of first grooves being arranged so as to circumferentially alternate with the second pair of the second grooves;
   - each first and second groove comprising a proximal end arranged at the central annular portion; in each first pair of first grooves the proximal ends are circumferentially staggered; in each second pair of second grooves the proximal ends are mutually circumferentially staggered and circumferentially staggered relative to the proximal ends of the first pair of first grooves;
   - the first and the second grooves extending axially away from equatorial plane over at least the 20% of the width L of the tread band;
   - each first or second groove of the first or of the second pair being arranged so as to have at least one first segment along a direction substantially corresponding to the direction of a reinforcing element of one of the first and the second carcass ply.

By direction substantially corresponding to another direction it is intended that the two directions have the same orientation, leaving out angles not exceeding 20°.

The Applicant has observed that such an arrangement and configuration of the first and of the second grooves generates a synergistic effect with the reinforcing elements of the underlying carcass plies suitable to increase the grip of the tyre without limiting the drainage and the strength thereof.

The Applicant is of the opinion that such an enhancement is due to a better local interaction between the tread pattern with the stress and deformation condition of the reinforcing elements of the of the underlying carcass plies.

The Applicant has, in fact, found that the aforementioned interaction, in a determined and precise portion of the tread band, allows having a rigid tyre at the equatorial plane and a reduced rigidity in a region away therefrom that allows broadening the footprint area, with advantage to the performance and the grip to the ground, without in any case reducing the strength thereof.

The broadening of the footprint area allows, in fact, increasing the forces which are transmitted to the ground, increasing in such a way also the braking and the tyre roadholding in bends.

The Applicant has, anyway, observed that typically a broader contact surface is considered as involving as a drawback the worsening of the drainage capability of the tyre.

Typically, in fact, it is believed that broad footprint areas can cause a worsening of the drainage since the lateral path of the water to be drained increases as compared to tyres with a narrower footprint to the ground.

Unexpectedly, the void/solid ratio and the configuration of the first and of the second grooves of the tyre according the present invention ensure instead optimal features of drainage also for vehicles used in tropical or sub-tropical geographic areas, with hot climates characterized by abundant precipitations.

By the expression "module of the tread pattern" it is meant a portion of tread pattern repeated equal to itself in a succession along the entire circumferential development of the tread band itself. The modules, even if maintaining the same pattern configuration, can have anyway different circumferential lengths. By the expression "substantially straight segments" segments are meant which are arranged according to straight lines over at least 80% of their extension.

By the expression "substantially consecutive straight segments" two straight segments are meant which are arranged directly one after the other, but also two substantially straight segments connected by a substantially curvilinear portion having an extension which is smaller than or equal to the shortest extension of the straight segments.

Furthermore, referring to the inclination of the grooves formed in the tread band relative to the equatorial plane of the tyre, said inclination shall be intended for each point of the groove as referred to the angle (comprised between 0° and 90°) formed by a rotation performed starting from the equatorial plane up to the direction tangent to the groove passing at that point.

Furthermore, the following definitions apply:
- By "motorcycles tyre" it is meant a tyre having a high curvature ratio (typically greater than di 0.200), capable of reaching high camber angles when the motorcycle runs in bends.
- By "radial angle" of the position of a groove or of a segment thereof, given a straight section of the tyre, it is meant the angle between the equatorial plane of the tyre fitted to the wheel of the motorcycle, not laying on the ground, and a radial plane passing through the mid line of the groove and the center of a circumference identified by three points: the point of intersection between equatorial plane and profile of the tyre; the points on the profile of the tyre belonging to the maximum chord.
- By "equatorial plane" of the tyre it is meant a plane perpendicular to the rotation axis of the tyre and that divides the tyre in two equal parts.
- By "circumferential" direction it is meant a direction generally oriented according to the rotation direction of the tyre, or in any case only slightly inclined relative to the rotation direction of the tyre.
- By "void/solid ratio" it is meant the ratio between the total surface of the recesses of a determined portion of the tread pattern of the tyre (possibly of the whole tread pattern) and the total surface of the determined portion of tread pattern (possibly of the whole tread pattern).
- By "curvature ratio" of the tyre it is meant the ratio between the distance of the radially highest point of the tread band from the maximum chord of the tyre, and the maximum chord of the tyre itself, in a transverse section of the same.

The present invention, in one or more preferred aspects, can comprise one or more of the features hereinafter reported.

Preferably, in each one pair of first grooves, a first groove can be arranged so as to have at least a first segment along a direction substantially corresponding to the direction of a reinforcing element of a first carcass ply and the remaining first groove can be arranged so as to have at least a first segment along a direction substantially corresponding to the direction of a reinforcing element of a second carcass ply. Preferably, in each pair of second grooves, a second groove is arranged so as to have at least a first segment along a direction substantially corresponding to the direction of a reinforcing element of a first carcass ply and the remaining second groove is arranged so as to have at least a first segment along a direction substantially corresponding to the direction of a reinforcing element of a second carcass ply.

Advantageously, the first grooves of the first pair can comprise, moving axially away from the equatorial plane of the tyre, at least two substantially straight and substantially consecutive segments, wherein the first segment has an inclination relative to the equatorial plane suitable for forming an angle α1 ≤ 40°.

Conveniently, the second grooves of the second pair of second grooves can comprise, moving axially away from the equatorial plane of the tyre, at least two substantially straight and substantially consecutive segments, wherein the first segment has an inclination relative to the equatorial plane suitable for forming an angle β1 ≤ 40°.

Preferably, the first segments of the first and of the second grooves are spaced apart from the equatorial plane and can extend in a radial region of the tread band defined by radial angles comprised between +/-5° and +/-15°, in the case of a tyre intended to be fitted to the rear wheel of a motorcycle, and between +/-5° and +/-45°, in the case of a tyre intended to be fitted to the front wheel of a motorcycle.

Conveniently, the first segments of the first and of the second grooves have inclination angles which are smaller than the inclination angles of the second segments of the first and of the second grooves; the second segments having a length measured along their extension smaller than the length of the first segments.

Advantageously, the first and the second grooves can comprise a third straight segment arranged consecutively to the second segment; said third segment having an inclination angle greater than the inclination angle of the respective second segment.

Preferably, the first segments of the first groove, respectively of the second groove, have a proximal end spaced apart from the equatorial plane by a predetermined distance. The proximal ends of the first grooves and of the second grooves can be arranged at the vertexes of a broken line located across the equatorial plane.

The proximal ends of the first segments of the first and of the second grooves are the proximal ends of the first and of the second grooves. By proximal end of a groove or of a segment thereof it is meant the end of the groove itself or of its segment which is less distant relative to the equatorial plane, in a direction orthogonal to the equatorial plane.

Conveniently, each proximal end of the first grooves and of the second grooves is spaced apart from the equatorial plane by a distance equal to at least the 5% of the width L of the tread band; and wherein the broken line comprises segments having substantially opposed inclinations relative to the equatorial plane, in other words having substantially a zig-zagging arrangement relative to the equatorial plane, the segments can be arranged along a direction substantially corresponding to the direction of a reinforcing element of one of the first and the second carcass ply.

Preferably, the proximal ends of the first segments of the first and of the second grooves are spaced apart from the equatorial plane and can extend in a radial region of the tread band defined by radial angles comprised between +/-5° and +/-12°, in the case of a tyre intended to be fitted to the rear wheel of a motorcycle, and between +/-3° and +/-10 °, in the case of a tyre intended to be fitted to the front wheel of a motorcycle.

Preferably, the central annular portion s is defined by the proximal ends of a pair of first or second grooves and has a void/solid ratio equal to zero.

Advantageously, the reinforcing elements of the first ply can be arranged so as to form an angle γ1 relative to the equatorial plane comprised in the range between 10° and 40°.

Preferably, the reinforcing elements of the second ply are arranged so as to form an angle γ2 relative to the equatorial plane comprised in the range between 10° and 40°.

Conveniently, in a module, the second segment of a first groove of a first pair of first grooves angularly deviates from the direction of the reinforcing elements of the first ply at most by an angle smaller than 20° and the second segment of the remaining first groove of said first pair of first grooves angularly deviates from the direction of the reinforcing elements of the second ply at most by an angle smaller than 20°.

Preferably, in a module the third segment of a first groove of a first pair of first grooves angularly deviates from the direction of the reinforcing elements of the first ply at most for by angle of 80° and at least by an angle of 15° and the third segment of the remaining first groove of the pair of first grooves angularly deviates from the direction of the reinforcing elements of the second ply at most by an angle of 80° and at least for an angle of 15°.

Conveniently, in a module the second segment of a second groove of a second pair of second grooves angularly deviates from the direction of the reinforcing elements of the first ply at most by an angle smaller than 20° and the second segment of the remaining second groove of the said second pair angularly deviates from the direction of the reinforcing elements of the second ply at most by an angle smaller than 20°.

Advantageously, in a module the third segment of a second groove of a second pair of second grooves angularly deviates from the direction of the reinforcing elements of the first ply at most by an angle of 80° and at least by an angle of 15° and the third segment of the remaining second groove of the pair angularly deviates from the direction of the reinforcing elements of the second ply at most by an angle of 80° and at least by an angle of 15°.

Conveniently, the first segments of the first and of the second grooves can have a length measured along their extension greater than 50 mm.

Advantageously, the third segments of the first and of the second grooves can have a length measured along their extension smaller than the length of the second segments.

Preferably, the module comprises a pair of third grooves.

Conveniently, the third grooves can extend in a radial region of the tread band defined by radial angles comprised between +/-35° and +/-60°, in the case of a tyre intended to be fitted to the rear wheel of a motorcycle, and between +/-25° and +/-40°, in the case of a tyre intended to be fitted to the front wheel of a motorcycle.

Conveniently, the first and the second grooves do not have points of mutual intersection.

Advantageously, to the end of not to excessively weaken the structure of the tyre, most of all at the portion of the tread band suitable for entering in the footprint area while the motorcycle runs in bends, the third grooves do not have intersection points neither with the first nor with the second grooves.

Each third groove has a free end close to the equatorial plane and a free end close to the edge of the tyre.

Preferably, in each module the third grooves have the proximal ends mutually staggered in a circumferential direction and staggered relative to the proximal ends of the first and of the second grooves.

Conveniently, the third grooves can comprise, moving axially away from the equatorial plane of the tyre, at least two substantially straight and substantially consecutive segments, wherein the first segment has an inclination relative to the equatorial plane suitable for forming an angle Δ₁ ≤ 40°.

Advantageously, the third grooves extend axially away from the equatorial plane over at most 5% of the width L of the tread band.

Preferably, the tyre can comprise a third carcass ply made of elastomeric material and comprising a plurality of reinforcing elements arranged parallel to one another; said third carcass ply being radially superimposed to the second carcass ply in such a way the reinforcing elements of the third ply are inclined relative to reinforcing elements of the second ply of the carcass and to the equatorial plane.

### Brief description of the figures

Further features and advantages of the invention will be presented in the following detailed description of some embodiments thereof, provided as a non-limiting example, made hereafter with reference to the annexed figures, wherein:
- figure 1 shows a perspective view of a first example of a tyre according to the invention intended to be fitted to the rear wheel of a motorcycle;
- figure 2 shows a portion of the tyre of figure 1 partially in section; and
- figure 3 shows a plan view of the tread band of the tyre of Fig. 1;

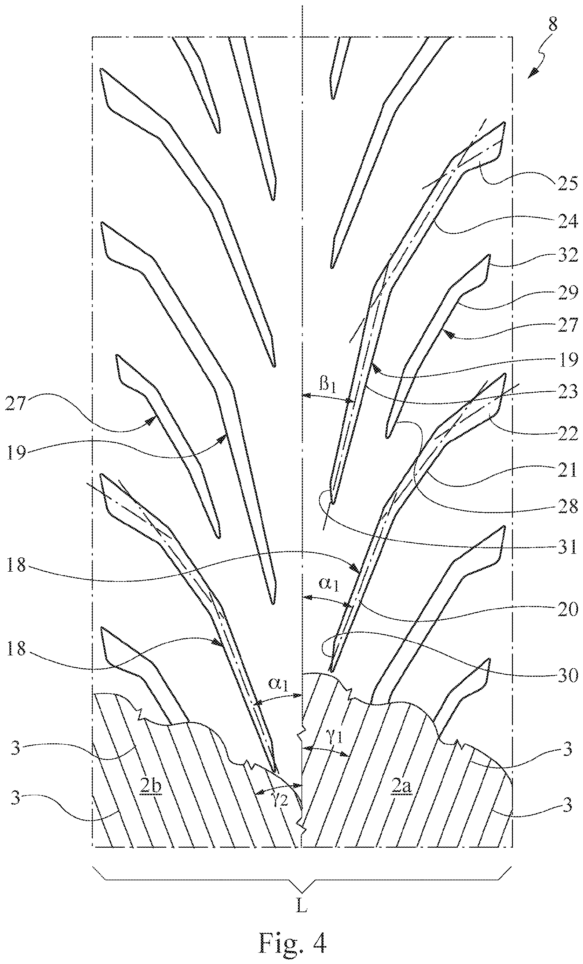

- figure 4 shows a plan view of the tread band of the tyre of Fig. 1, with respectively a portion of tread band and of a carcass ply being taken away.

### Detailed description of the embodiments of the tyre.

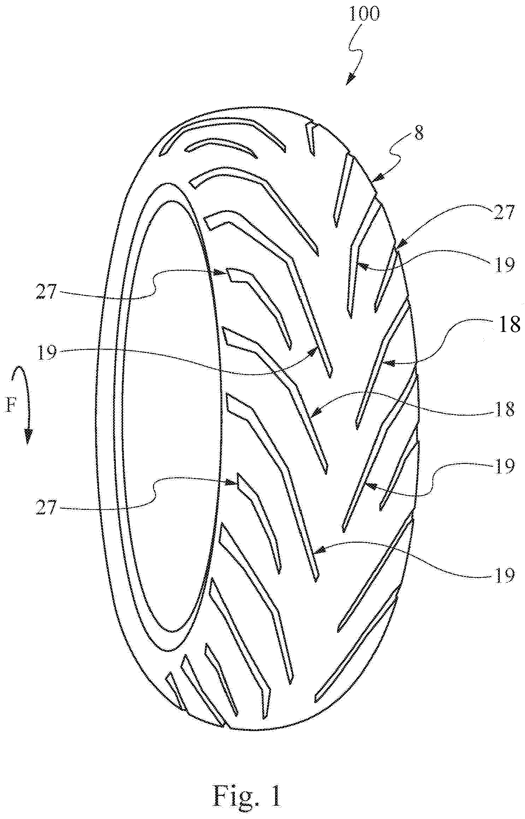

In figure 1, at 100 is globally indicated a tyre for motorcycle wheels according to the present invention. The tyre is preferably intended to be used on a rear wheel of a motorcycle, in motorcycles with medium/small displacement, for example 250cc.

Also referring to figure 1, in the tyre 100 is defined an equatorial plane X-X and a rotation axis (not shown in the figure). A circumferential direction (indicated in the figures by an arrow F oriented in the rotation direction of the tyre) and an axial direction perpendicular to the equatorial plane X-X are further defined.

The tyre 100 comprises a carcass structure 2 comprising at least one first 2a and one second carcass ply 2b, radially superimposed, each made of elastomeric material and comprising a plurality of reinforcing elements 3 arranged parallel to one another.

The first 2a and the second carcass ply 2b engage, by means of their opposite circumferential edges, also superimposed, at least one annular reinforcing structure 9.

In particular, opposite lateral edges of the carcass plies 2a, 2b are turned up around reinforcement annular structures called bead cores 4.

A tapered elastomeric filling 5 is applied on the axially outer perimeter of the bead cores 4 and takes up the space defined between the carcass plies 2a, 2b and the respective turned-up lateral edge of the carcass plies 2a, 2b.

As known, the region of the tyre comprising the bead 4 and the filling 5 forms the so-called bead, provided for anchoring the tyre to a corresponding mounting rim, not shown.

The carcass plies are radially superimposed in such a way that the reinforcing elements 3 of a ply are inclined relative to the reinforcing elements 3 of the carcass ply radially superimposed and to the equatorial plane X-X.

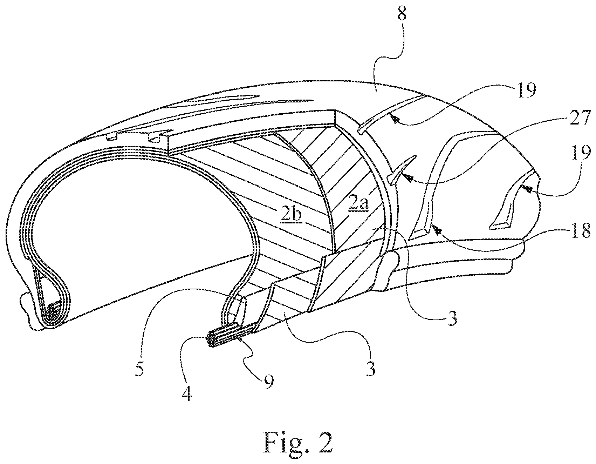

Referring to embodiment shown in figure 2, the carcass structure 2 has a first 2a and a second carcass ply 2b radially superimposed to the first carcass ply 2a.

In the first carcass ply 2a the reinforcing elements 3 are arranged so as to form an angle γ1 relative to the equatorial plane X-X comprised in the range between 10° and 40°, preferably between 15° and 35°. In the second carcass ply 2b the reinforcing elements 3 are arranged so as to form an angle γ2 relative to the equatorial plane X-X comprised in the range between 10° and 40°, preferably between 15° and 35°. The reinforcing elements 3 of the second ply 2b are oppositely arranged relative to the reinforcing elements 3 of the first carcass ply 2a, in other words they have the same inclination relative to the equatorial plane X-X, but opposite orientation.

Always referring to the embodiment shown in figure 2, the reinforcing elements 3 included in the carcass plies 2a, 2b preferably comprise textile cords, selected among those usually adopted in the production of tyre carcasses, for example nylon, rayon, PET, PEN cords, with an elementary thread having a diameter comprised between 0,35 mm and 1 ,5 mm.

Referring to embodiment shown in figures 1-3, it can be seen that the tyre 100, in radially outer position relative to the carcass structure 2, does not have a belt structure.

Alternatively, in an embodiment not shown, the tyre 100 could have a belt structure.

According to this last embodiment, the belt structure can be formed by at least two radially superimposed layers, each one consisting of an elastomeric material reinforced with cords arranged parallel one another. The layers are arranged in such a way that the cords of the first belt layer are oriented obliquely relative to the equatorial plane X-X of the tyre, while the cords of the second layer also have an oblique orientation, but symmetrically crossed relative to the cords of the first layer (the so-called "crossed belt"). In such a case the cords of the belt structure are textile or metallic cords.

A tread band 8 is circumferentially applied in a radially outer position onto the carcass structure 2., , Longitudinal and/or transversal grooves, arranged so as to define a desired pattern tread, are typically formed on the tread band 8further to a molding operation performed in conjunction with the vulcanization of the tyre.

The tyre 100 can comprise a pair of sidewalls laterally applied on opposite sides to said carcass structure 2.

The tyre 100 has a cross section characterized by a high transverse curvature.

In particular, the tyre 100 has a section height H measured, at the equatorial plane, between the top of the tread band and the fitting diameter, defined by the reference line r, passing through the beads of the tyre.

The tyre 100 has furthermore a width C defined by the distance between the laterally opposed ends of the tread itself, and a curvature defined by the particular value of the ratio between the distance f of the top of the tread by the line passing through the ends of the tread itself, measured at the equatorial plane of the tyre, and the aforementioned width C. The ends of the tread can be formed with a corner.

By tyres with high curvature in the present description and in the following claims are meant tyres that have a curvature ratio f/C not lower than 0,2, preferably f/C≥ 0,25, for example 0,28. Preferably, said curvature ratio f/C is not greater than 0,8, preferably f/C≤0,5.

Preferably the tyres do not have particularly low sidewalls. In other words, by tyres with low sidewalls are meant tyres wherein the ratio between the sidewall height and the overall height of the section measured between the top of the tread and the beads at the fitting level to the rim (H-f)/H is greater than 0,5, in any case lower than 0,8, for example 0,6.

The carcass structure 2 is typically lined on its inner walls by a sealing layer, or so-called "liner", essentially consisting of a layer of airtight elastomeric material, suitable for ensuring the sealing of the tyre itself once inflated.

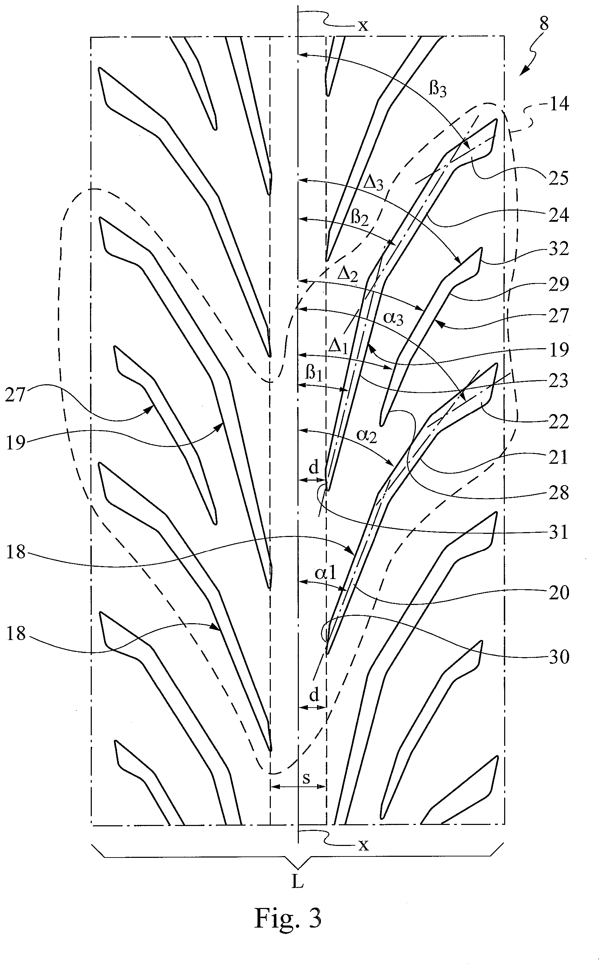

On the tread band 8, as it is shown in figure 3, is formed a tread pattern comprising a plurality of grooves. To the end of ensuring an effective drainage of the water and at the same time a suitable reduction of the rigidity of the structure of the tyre, the grooves define overall on the tread band a void/solid ratio greater than of 4%.

The tread pattern comprises a module 14 replicated along a direction of circumferential development of the tyre. The module 14 is repeated at most thirteen times along the circumferential development of the tyre. Preferably at most ten times, for example eight times.

The module 14 has a pair of first grooves 18 oppositely inclined relative to the equatorial plane X-X and a second pair of second grooves 19 also oppositely inclined relative to the equatorial plane X-X of the tyre.

Always to the end of ensuring a suitable drainage and a sufficient synergistic interaction with the deformation condition of the reinforcing elements 3 of the underlying carcass plies 2a, 2b, the first 18 and the second 19 grooves have a considerable size. In particular, each first 18 and second groove 19 extends axially away from the equatorial plane X-X over at least 20% of the width L of the tread band 8.

As better shown in figure 3, the first 18 and the second 19 grooves of the first and of the second pair are arranged so as to form a central annular portion s across the equatorial plane X-X that has a void/solid ratio less than 0, 1 %.

The applicant has in fact found that, for this category of motorcycles, the drainage is performed in particular by the grooves arranged in a portion of the tread band which is central but spaced apart from to the equatorial plane.

The Applicant has furthermore found that a more central portion of the tread band across the equatorial plane provided with an appropriate rigidity is convenient for allowing a suitable transmission to the ground of the traction torque when running in straight stretch. The Applicant has therefore found that in this portion of tread band the grooves should not interact synergistically with the underlying reinforcing elements 3, so as to not to excessively weaken the structure of the tyre in this area intended to transmit to the ground the traction torque, above all when running in straight stretch.

Preferably, to this end the central annular portion s across the equatorial plane X-X has a void/solid ratio substantially equal to zero.

The width I of the central annular portion s is at most equal to 0,1 L, where L is the width of the tread band 8.

The central annular portion s can be identified as the smallest distance, in axial direction, between two proximal ends 30,31 of the first pair of first grooves 18 or of the second pair of second grooves 19.

Referring to embodiment shown in figures it can be seen that the first pair of first grooves 18 is arranged circumferentially alternated to the second pair of the second grooves 19.

Preferably, the first grooves 18 of the first pair are mutually circumferentially staggered and the second grooves 19 of the second pair are mutually circumferentially staggered and circumferentially staggered relative to the first grooves 18 of the first pair.

The proximal ends 30,31 of the first grooves 18 and of the second grooves 19 lying axially more inwardly, i.e. closer to the equatorial plane X-X, are arranged at the vertexes of a broken line arranged across the equatorial plane X-X.

The Applicant has found that such an arrangement of the proximal ends 30,31 of the first and of the second grooves, synergistically with the inclination of the reinforcing elements 3 of the first 2a and of the second carcass ply 2b, allows on the one to increase the footprint area of the tyre, providing grip features above all when running in straight stretch, and on the other hand to generate a containment effect of the deformation produced by the excessive structural deformation.

Preferably, the proximal ends 30,31 of the first grooves 18 and of the second grooves 19 can extend in a radial region of the tread band defined from radial angles comprised between +/-5° and +/-12°, in the case of a tyre intended to be fitted to the rear wheel of a motorcycle, and between +/-3° and +/-10°, in the case of a tyre intended to be fitted to the front wheel of a motorcycle

Referring to embodiment shown in figures 1 -3, each first groove 18 comprises, moving axially away from the equatorial plane X-X of the tyre, three substantially consecutive and straight segments 20,21 ,22.

In the case of tyre intended to be fitted to the rear wheel of a motorcycle as the one represented in figures 1-3, the first segment 20 has an inclination relative to the equatorial plane X-X suitable for forming an angle α1≤40°, preferably greater than 10°, for example equal to about 25°.

The second segment 21 has, instead, an inclination relative to the equatorial plane X-X suitable for forming an angle α2 greater than of 20°, preferably smaller than 60°, for example equal to about 40°.

The third segment 22 has an inclination relative to equatorial plane X-X suitable for forming an angle α3 greater than of 40°, preferably smaller than 90°, more preferably smaller than 70°, for example equal to about 60°.

In other words, moving axially away from the equatorial plane X-X along the first groove 18 it is can be noted a significant increase of the inclination of the first groove 18. The second segment 21 has in fact an inclination relative to the equatorial plane X-X greater than the inclination of the first segment 20, while the third segment 22 has an inclination relative to the equatorial plane X-X greater than the inclination of the second segment 21.

For providing high drainage features, preferably the first segment 20 of the first longitudinal grooves 18 has a length measured along its extension greater than 4% of the circumferential development of the tyre. Preferably smaller than 12% of the circumferential development of the tyre.

In other words, the first segment 20 of the first longitudinal grooves 18 has a length measured along its extension greater than 50 mm.

The second substantially straight segment 21 of the first longitudinal grooves 18 has, instead, a length measured along its extension which is smaller than the length of the first segment 20.

Preferably the second substantially straight segment 21, of the first longitudinal grooves 18 has a length measured along its extension smaller than 3% of the circumferential development of the tyre. Preferably, smaller than 2% of the circumferential development of the tyre.

Preferably, the second substantially straight segment 21 has a length measured along its extension smaller than 40 mm, more preferably smaller than 30 mm.

In the embodiment shown in figure 3, the third substantially straight segment 22 has an extension smaller than the extension of the second segment 21.

Such a choice of conformation of the third segment 22 allows for reducing the noise level of the tread pattern without significantly affecting the drainage. Always referring to the embodiment shown in figures 1 and 3, the first segment 20 extends in a radial region of the tread band 8 defined by radial angles comprised between +/-5° and +/-15°, in the case of a tyre intended to be fitted to the rear wheel of a motorcycle, and between +/-5° and +/-45°, in the case of a tyre intended to be fitted to the front wheel of a motorcycle.

Referring to figures 1 and 3, the first segments 20 of the first longitudinal grooves 18 lying on the right of the equatorial plane X-X extend in a radial region of the tread band defined by radial angles comprised between +5° and +15°, while the first segments 20 of the first longitudinal grooves 18 lying on the left of the equatorial plane X-X extend in a radial region of the tread band 8 defined by radial angles comprised between -5° and -15°. The second segment 21 extends in a radial region of the tread band 8 defined by radial angles comprised between +/-10° and +/-60°, in the case of a tyre intended to be fitted to the rear wheel of a motorcycle, and between +/-15° and +/-55°, in the case of a tyre intended to be fitted to the front wheel of a motorcycle. Also in this case, with reference to figures 1 and 3, in the case of tyres intended to be fitted to the rear wheel of a motorcycle, the second segments 21 of the first grooves 18 lying on the right of the equatorial plane X-X extend in a radial region of the tread band defined by radial angles comprised between +10° and +60°, while the second segments 21 of the first grooves 18 lying on the left of the equatorial plane X-X extend in a radial region of the tread band defined by radial angles comprised between -10° and -60°.

Finally, the third segment 22 extends in a radial region of the lateral annular portion C defined by radial angles comprised +/-40° and +/-10°, in the case of a tyre intended to be fitted to the rear wheel of a motorcycle, and between +/-45° and +1-10°, in the case of a tyre intended to be fitted to the front wheel of a motorcycle. Referring to figure 3, therefore, in the case of tyres intended to be fitted to the rear wheel of a motorcycle, the third segments 22 of the first grooves 18 lying on the right of the equatorial plane X-X extend in a radial region of the tread band 8 defined by radial angles comprised between +40° and +70°, while the third segments 22 of the first grooves 18 lying on the left of the equatorial plane X-X extend themselves in a radial region of the tread band defined by radial angles comprised between -40° and -70°.

Always referring to embodiment shown in figure 3, each second groove 19 comprises, moving axially away from the equatorial plane X-X of the tyre, three substantially consecutive and straight segments 23,24,25.

In the case of a tyre intended to be fitted to the rear wheel of a motorcycle, such as that shown in figures 1-3, the first segment 23 has an inclination relative to equatorial plane X-X suitable for forming an angle β1≤40°, preferably greater than di 5°, for example equal to about 15°.

The second segment 24 has, instead, an inclination relative to the equatorial plane X-X suitable for forming an angle β2 greater than of 15°, preferably smaller than 50°, for example equal to about 30°. The third segment 25 has an inclination relative to the equatorial plane X-X suitable for forming an angle β3 greater than 30°, preferably smaller than 90°, more preferably smaller than 70°, for example equal to about 60°.

In other words, moving axially away from the equatorial plane X-X along the second groove 19 it can be observed a considerable reduction of the inclination of the second groove 19 itself. The second segment 24 has, in fact, an inclination relative to the equatorial plane X-X smaller than the inclination of the first segment 23, while the third segment 25 has an inclination relative to the equatorial plane X-X lower of the inclination of the second segment 24.

In this case as well, in order to providing drainage features, preferably the first segment 23 of the second grooves 19 has a length measured along its extension greater than 4% of the circumferential development of the tyre. Preferably smaller than 12% of the circumferential development of the tyre. In other words, the first segment 23 of the second grooves 19 has a length measured along its extension greater than 50 mm.

The second substantially straight segment 24 of the second longitudinal grooves 19 has, in contrast, a length measured along its extension smaller than the length of the second segment 20.

Preferably, the second substantially straight segment 24 of the second grooves 19 has a length measured along its extension smaller than 3% of the circumferential development of the tyre. Preferably, smaller than 2% of the circumferential development of the tyre.

Preferably, the second substantially straight segment 24 has a length measured along its extension smaller than 40 mm, more preferably smaller than 30 mm.

Nella embodiment shown in figure 3, the third substantially straight segment 25 has an extension less than the extension of the second segment 24 in turn less than the extension of the first segment 23. Such a choice of conformation of the third segment 25 allows for reducing the noise level of the tread pattern without significantly affecting the drainage features.

Always referring to the embodiment shown in figures 1 and 3, the first segment 23 extends in a radial region of the tread band 8 defined by radial angles comprised between +/-5° and +/-15°, in the case of a tyre intended to be fitted to the rear wheel of a motorcycle, and between +/-5° and +/-45°, in the case of a tyre intended to be fitted to the front wheel of a motorcycle.

Referring to figures 1 and 3, the first segments 23 of the second grooves 19 lying on the right of the equatorial plane X-X extend in a radial region of the tread band 8 defined by radial angles comprised between +5° and +15°, while the first segments 23 of the second grooves 19 lying on the left of the equatorial plane X-X extend themselves in a radial region of the tread band 8 defined by radial angles comprised between -5° and -15°.

Always referring to figures 1 and 3, the second segment 24 extends in a radial region of the tread band 8 defined by radial angles comprised between +/-10° and +/-60°, in the case of a tyre intended to be fitted to the rear wheel of a motorcycle, and between +/-15° and +/-60°, in the case of a tyre intended to be fitted to the front wheel of a motorcycle. Also in this case, referring to figures 1 and 3, in the case of tyres intended to be fitted to the rear wheel of a motorcycle, the second segments 24 of the second grooves 19 lying on the right of the equatorial plane X-X extend in a radial region of the tread band defined by angles of radials comprised between +10° and +60°, while the second segments 24 of the second grooves 19 lying on the left of the equatorial plane X-X extend in a radial region of the tread band defined by radial angles comprised between -10° and -60°.

Finally, the third segment 25 extends in a radial region of the tread band 8 defined by radial angles comprised between +/-20° and +/-10°, in the case of a tyre intended to be fitted to the rear wheel of a motorcycle and between +/-20° and +/-15°, in the case of a tyre intended to be fitted to the front wheel of a motorcycle. Referring to figure 3, therefore in the case of tyres intended to be fitted to the rear wheel of a motorcycle, the third segments 25 of the second grooves 19 lying on the right of the equatorial plane X-X extend in a radial region of the portion of tread band defined by radial angles comprised between +20° and +70°, while the segments 25 of the second grooves 19 lying on the left of the equatorial plane X-X extend themselves in a radial region of the tread band defined by radial angles comprised between -20° and -70°.

In the embodiment shown in figures 1-3 the first and the second grooves 18, 19 have a decreasing depth, which gets smaller moving from the equatorial plane X-X toward the axially outer edges of the tyre, preferably the first and the second grooves longitudinal 18, 19 have a depth smaller than or equal to 8 mm.

According to an embodiment shown in figure 3, the first and the second grooves 18, 19 have an increasing width along their extension, which gets larger moving from the first segment 20,23 toward the edges of the tread band, that is to say from the first 20,23 to the third segment 22,25. Preferably, the first longitudinal grooves 18, 19 have a maximum width smaller than or equal to 15 mm, preferably smaller than or equal to 12mm.

The Applicant has observed that the aforementioned choices in terms of depth and width of the first and of the second grooves 18, 19 allow on the one hand to the drainage of the tyre to be further enhanced and on the other hand the structural rigidity of the tread band to be reduced, thus favoring the synergistic cooperation between the pattern of the tread band and the reinforcing elements 3 of the carcass plies 2a, 2b to the end of obtaining a broadened footprint area.

Always for ensuring optimal drainage features, the module 14 further comprises a pair of third grooves 27.

The third grooves 27 of each pair of third grooves 27 are arranged opposite to each other relative to the equatorial plane X-X and are circumferentially staggered.

Referring to embodiment shown in figures 1-3, it can be seen that the pair of third grooves 27 is arranged axially outwardly relative to the pair of second grooves 19 and inwardly relative to the pair of first grooves 18.

In detail, the third grooves 27 extend in a radial region of the tread band 8 defined by radial angles comprised between +/-10° and +1-15°, in the case of a tyre intended to be fitted to the rear wheel of a motorcycle, and between +/-20° and +/-/5°, in the case of a tyre intended to be fitted to the front wheel of a motorcycle.

Each one third groove 27 extends axially away from the equatorial plane X-X at most over 4% of the width L of the tread band 8.

Always referring to the embodiment shown in the figure, it can be seen that the third grooves 27 comprise, moving axially away from the equatorial plane X-X of the tyre, three substantially straight and substantially consecutive segments 28,29,32, wherein the first segment 28 has an inclination relative to the equatorial plane X-X suitable for forming an angle Δ1≤ 40°.

Always referring to the embodiment shown in figures 1-3, it can be seen that to the end of not creating point of excessive structural weakening, the third grooves 27 do not have intersection points neither with the first 18 nor with the second grooves 19.

The inclination of the third grooves decreases moving axially away from the equatorial plane X-X. The inclination of the second segment 29 of the third grooves is therefore greater than the inclination of the first segment 28 and the inclination of the third segment 32 is greater than the inclination of the second segment 29.

The second segment 29 has, in fact, an inclination relative to the equatorial plane X-X suitable for forming an angle Δ2 smaller than 60°, preferably greater than di 15°.

The third segment 32 has an inclination relative to the equatorial plane X-X suitable for forming an angle Δ3 smaller than 80°, preferably greater than 30°.

Always referring to the embodiment shown in figures 1 and 3, it can be seen that, preferably, in each module the third grooves have their proximal ends, that is to say the ends which are less distant from the equatorial plane X-X or proximal thereto, mutually staggered in circumferential direction and staggered relative to the proximal ends 30,31 of the first 18 and of the second grooves 19. According to an aspect of the present invention, each first 18 or second 19 groove of the first or of the second pair is arranged so as to have at least the first segment 20,23 along a direction substantially corresponding to the direction of a reinforcing element 3 of one of the first 2a and the second 2b carcass ply.

In detail, referring to the embodiment shown in figures 1-3, in each one pair of first grooves 18, a first groove 18 is arranged so as to have at least the first segment 20 along a direction substantially corresponding to the direction of a reinforcing element 3 of the first carcass ply 2a and the remaining first groove 18 of the same pair is arranged for at least the first segment 20 along a direction substantially corresponding to the direction of a reinforcing element 3 of the second carcass ply 2b. The same applies for the second pairs of second grooves 19.

In other words, wherein in each one pair of second grooves 19, a second groove 19 is arranged for at least the first segment 23 along a direction substantially corresponding to the direction of a reinforcing element 3 of a first carcass ply 2a and the remaining second groove 19 is arranged so as to have at least the first segment 23 along a direction substantially corresponding with the direction of a reinforcing element 3 of a second carcass ply 2b.

In other words, the first 18 and the second 19 grooves arranged on one side of the equatorial plane X-X, for example on the right side with reference to figure 3, have at least the respective first segments 20,23 arranged along directions which are substantially corresponding with the directions of the underlying reinforcing elements 3 of the first carcass ply 2a.

The first 18 and the second 19 grooves arranged on the other side of the equatorial plane X-X, for example the left side with reference to figure 3, have at least the respective first segments 20,23 arranged along directions substantially corresponding with the directions of the underlying reinforcing elements 3 of the second carcass ply 2b.

Always for maintaining this substantial alignment between the direction of the first and second grooves 18, 19 and the direction of the reinforcing elements 3 of the underlying carcass plies 2a, 2b, in each module 14 the second segment 21 of a first groove 18 of a first pair of first grooves 18 angularly deviates from the direction of the reinforcing elements of the first ply 2a at most by an angle smaller than 20° and the second segment 21 of the remaining first groove 18 of the first pair of first grooves 18 angularly deviates from the direction of the reinforcing elements 3 of the second ply 2b at most by an angle smaller than 20°.

Similarly, for the second grooves 19, in each module 14 the second segment 24 of a second groove 19 of a second pair of second grooves 19 angularly deviates from the direction of the reinforcing elements 3 of the first ply 2a at most by an angle smaller than 20° and the second segment 24 of the remaining second groove 19 of the second pair angularly deviates from the direction of the reinforcing elements 3 of the second ply 2b at most by an angle smaller than 20°.

The Applicant has furthermore found that in the portion of the tread band which is closer to the edges, it is not necessary to keep the aforementioned alignment between the grooves and the reinforcing elements 3 of the underlying carcass plies, being instead preferable that such an alignment is not present, so as to make the tyre rigid and let the same have an appropriate response to the stresses that arise in leaning when a running in bend.

In other words, the Applicant is of the opinion that while in the substantially most central portion of the tread band the cooperation provided by the substantial alignment between the direction of the first 18 and second grooves 19 and the reinforcing elements of the carcass plies 2a, 2b allows the tyre to be less rigid, advantaging the grip and predictability of the tyre, above all while running in straight stretch, moving away from the equatorial plane toward the edges it is important that the tread band again increases its rigidity, for enhancing the response to the stresses that arise while running in bends. To this end, preferably in each module 14 the third segment 22 of a first groove 18 of a first pair of first grooves 18 angularly deviates from the direction of the reinforcing elements 3 of the first ply 2a at most by an angle of 80° and at least by an angle of 15° and the third segment of the remaining first groove 18 of the same pair of first grooves 18 angularly deviates from the direction of the reinforcing elements 3 of the second ply 2b at most by an angle of 80° and at least by an angle of 15°. Similarly, for the second grooves 19, in each module 14 the third segment 25 of a second groove 19 of a second pair of second grooves 19 angularly deviates from the direction of the reinforcing elements 3 of the first ply 2a at most by an angle of 80° and at least by an angle of 15° and the third segment 25 of the remaining second groove 19 of the same pair angularly deviates from the direction of the reinforcing elements 3 of the second ply 2b at most by an angle of 80° and at least by an angle of 15°.

### Examples

Different samples of the tyre according to an embodiment of the present invention, and in particular having the tread of figure 1 ,3 and a carcass structure with crossed plies, have been realized.

A pair of tyres according to the invention, respectively a front and a rear tyre (inv. 1), have been subjected to comparison tests with a pair of reference tyres P, model SPORT DEMON™ that has a carcass structure with crossed plies and represents a product intended to the same market segment. The front tyres, both those according to the invention and those taken as reference, had size 100/80-with a 17" rim and inflation pressure of 2,25 bars, while the rear tyres had size 130/70- with a 17" rim and inflation pressure 2,5 bars.

The tests have been performed at an environment temperature of 29°+/- 2°C.

The tests have been made by equipping a motorcycle Yamaha Fazer 250cc with the pairs of tyres to be compared. In Table 1 are reported the evaluations obtained by the pair of tyres according to the invention as compared to the pair of reference tyres for the following parameters: stability in bends; front grip; rear grip; braking and traction; front drainage; rear drainage; drainage grip; front/rear balancing; keeping of trajectory, predictability, controllability, safety feeling, driving neutrality.

To the end of evaluating such parameters, the test driver simulated on track some typical maneuvers. Hence, the tester evaluated the behaviour of the tyre based on the performance of the tyre during said manoeuver.

The results of these tests are expressed through the symbols greater than, less than or equal referred to the pair of reference tyres.

The references produced in the subsequent table represent an average value among those obtained in a several test sessions (5-6 tests, for example) and being provided by many test drivers

**Table 1**

| | | Pair of reference tyres P | Pair of tyres of the invention (INV1) |
|---|---|---|---|
| Stability in bends | | = | ++ |
| Front grip | | = | = |
| Rear grip | | = | = |
| Braking and traction | Front | = | = |
| | Rear | = | = |
| Front drainage | Straight stretch | = | + |
| | Bends | = | + |
| Rear drainage | Straight stretch | = | = |
| | Bends | = | = |
| Drainage grip | | = | |
| Front / rear balancing; | | = | = |
| Keeping of trajectory | Constant speed | = | = |
| | Acceleration | = | + |
| Predictability | | = | + |
| Controllability | | = | + |
| Safety feeling | | = | + |
| Driving neutrality | | = | + |

The tyre according to the invention has a comparable or even better behaviour with respect to the reference tyre for all of the evaluated features.

The present invention has been described with reference to some embodiments thereof. Many variations can be made to the embodiment described in detail, in any case remaining within the scope of protection of the invention, defined by the following claims.

## Claims

1. Motorcycle tyre (100), comprising:
- a tread band (8) comprising a plurality of grooves (18, 19) arranged radially externally to a carcass structure (2)
- said tread band (8) having a void/solid ratio greater than 4%;
- said tread band (8) comprising a module (14) replicated along a circumferential development direction of the tyre comprising:
- a first pair of first grooves (18), oppositely inclined relative to the equatorial plane (X-X) of the tyre;
- a second pair of second grooves (19) oppositely inclined relative to the equatorial plane (X-X) of the tyre;
- the first and the second grooves of the first and of the second pair being arranged so as to form a central annular portion (s) across the equatorial plane (X-X) having a void/solid ratio smaller than 0,1 %;
- each first (18) and second groove (19) comprising a proximal end (30, 31) arranged at the central annular portion (s); in each first pair of first grooves (18) said proximal ends (30) are circumferentially staggered; in each second pair of second grooves (19) said proximal ends (31) are mutually circumferentially staggered and circumferentially staggered relative to said proximal ends (30) of the first pair of first grooves (18);
- the first pair of first grooves (18) being arranged circumferentially sequentially to the second pair of the second grooves (19);
- the first (18) and the second grooves (19) extending axially away from the equatorial plane (X-X) over at least 20% of the width L of the tread band (8); **characterized in that** the motorcycle tyre (100) further comprises:
- the carcass structure (2) comprising at least one first (2a) and at least one second (2b) carcass ply, radially superimposed, each one made of elastomeric material and comprising a plurality of reinforcing elements (3) arranged parallel to one another; said at least one first (2a) and at least one second (2b) carcass ply being mutually crossed in such a way that the reinforcing elements of the first carcass ply (2a) are inclined relative to the reinforcing elements of the second carcass ply (2b) and to an equatorial plane (X-X) of the tyre; and that
- each first (18) or second (19) groove of the first or of the second pair being arranged so as to have at least one first segment (20, 23) along a direction substantially corresponding to the direction of a reinforcing element (3) of one of the first (2a) and the second (2b) carcass ply.

2. Motorcycle tyre (100) according to claim 1, wherein in each pair of first grooves (18), a first groove (18) is arranged so as to have at least a first segment (20) along a direction substantially corresponding to the direction of a reinforcing element (3) of a first carcass ply (2a) and the remaining first groove (18) is arranged so as to have at least a first segment (20) along a direction substantially corresponding to the direction of a reinforcing element (3) of a second carcass ply (2b).

3. Motorcycle tyre (100) according to claim 1 or 2, wherein in each pair of second grooves (19), a second groove (19) is arranged so as to have at least a first segment (23) along a direction substantially corresponding to the direction of a reinforcing element (3) of a first carcass ply (2a) and the remaining second groove (19) is arranged so as to have at least a first segment (23) along a direction substantially corresponding to the direction of a reinforcing element (3) of a second carcass ply (2b).

4. Motorcycle tyre (100) according to any one of claims 1 to 3, wherein the first grooves (18) of the first pair comprise, moving axially away from the equatorial plane (X-X) of the tyre, at least two substantially straight and consecutive segments (20,21), wherein the first segment (20) has an inclination relative to the equatorial plane (X-X) forming an angle α1≤ 40°.

5. Motorcycle tyre (100) according to any one of claims 1 to 4, wherein the second grooves (19) of the second pair of second grooves (19) comprise, moving axially away from the equatorial plane (X-X) of the tyre, at least two substantially straight and substantially consecutive segments (23,24), wherein the first segment (23) has an inclination relative to the equatorial plane X-X forming an angle β1≤ 40°.

6. Motorcycle tyre (100) according to claim 1, wherein the first segments (20,23) of the first (18) and of the second (19) grooves are spaced apart from the equatorial plane (X-X) and extend in a radial region of the tread band (8) defined by radial angles comprised between +/-5° and +/-15°, in the case of a tyre intended to be fitted to the rear wheel of a motorcycle, and between +/-5° and +/-45°, in the case of a tyre intended to be fitted to the front wheel of a motorcycle.

7. Motorcycle tyre (100) according to any one of claims 5 or 6, wherein the first segments (20,23) of the first (18) and of the second (19) groove have inclination angles (α1, β1) relative to the equatorial plane (X-X) which are smaller than respective inclination angles (α2, β2) of the second segments (21 ,24) of the first (18) and of the second (19) grooves; the second segments (21 ,24) having a length measured along the their extension smaller than the length of the first segments (20,23).

8. Motorcycle tyre (100) according to any one of the preceding claims 1 to 7, wherein said first (18) and said second (19) grooves comprise a third straight segment (22,25) arranged consecutively to the second segment (21 ,24); said third segment (22,25) having an inclination angle (α3, β3) relative to the equatorial plane (X-X) greater than the inclination angle (α2, β2) of the respective second segment (21 ,24).

9. Motorcycle tyre (100) according to any one of the preceding claims 1 to 8, wherein the first grooves (18) of the first pair are mutually circumferentially staggered and the second grooves (19) of the second pair are mutually circumferentially staggered and circumferentially staggered relative to the first grooves (18) of the first pair.

10. Motorcycle tyre (100) according to any one of the preceding claims 2 to 9, wherein said proximal ends (30,31) are spaced apart from the equatorial plane (X-X) by a predetermined distance d, the proximal ends (30,31) of the first grooves (18) and of the second grooves (19) being arranged at the vertexes of a broken line arranged across the equatorial plane (X-X); said broken line comprises segments having a substantially zig-zagging arrangement relative to the equatorial plane (X-X), said segments being arranged along a direction substantially corresponding to the direction of a reinforcing element (3) of one of the first (2a) and the second (2b) carcass ply.

11. Motorcycle tyre (100) according to claim 10, wherein each proximal end (30,31) of the first grooves (18) and of the second grooves (19) is spaced apart from the equatorial plane (X-X) by a distance d equal to at least the 5% of the width L of the tread band (8).

12. Motorcycle tyre (100) according to any one of the previous claims 1 to 11, wherein the reinforcing elements (3) of the first ply (2a) are arranged so as to form an angle γ1 relative to the equatorial plane (X-X) comprised in the range between 10° and 40°.

13. Motorcycle tyre (100) according to any one of the preceding claims 1 to 11, wherein the reinforcing elements (3) of the second ply (2b) are arranged so as to form an angle γ2 relative to the equatorial plane X-X comprised in the range between 10° and 40°.

14. Motorcycle tyre (100) according to any one of the preceding claims 1 to 13, wherein in each module (14) the second segment (21) of a first groove (18) of a first pair of first grooves (18) angularly deviates from the direction of the reinforcing elements of the first ply (2a) at most by an angle smaller than 20° and the second segment (21) of the remaining first groove (18) of said first pair of first grooves (18) angularly deviates from the direction of the reinforcing elements (3) of the second ply (2b) at most by an angle smaller than 20°.

15. Motorcycle tyre (100) according to any one of the preceding claims 8 to 14, wherein in each module (14) the third segment (22) of a first groove (18) of a first pair of first grooves (18) angularly deviates from the direction of the reinforcing elements (3) of the first ply (2a) at most by an angle of 80° and at least by an angle of 15° and the third segment (22) of the remaining first groove (18) of said pair of first grooves (18) angularly deviates from the direction of the reinforcing elements (3) of the second ply (2b) at most by an angle of 80° and at least by an angle of 15°.

16. Motorcycle tyre (100) according to any one of the preceding claims 1 to 15, wherein in each module (14) the second segment (24) of a second groove (19) of a second pair of second grooves (19) angularly deviates from the direction of the reinforcing elements (3) of the first ply (2a) at most by an angle smaller than 20° and the second segment (24) of the remaining second groove (19) of said second pair angularly deviates from the direction of the reinforcing elements (3) of the second ply (2b) at most by an angle smaller than 20°.

17. Motorcycle tyre (100) according to any one of the preceding claims 8 to 16, wherein in each module (14) the third segment (25) of a second groove (19) of a second pair of second grooves (19) angularly deviates from the direction of the reinforcing elements (3) of the first ply (2a) at most by an angle of 80° and at least by an angle of 15° and the third segment (25) of the remaining second groove (19) of said pair angularly deviates from the direction of the reinforcing elements (3) of the second ply (2b) at most by an angle of 80° and at least by an angle of 15°.

18. Motorcycle tyre (100) according to any one of the preceding claims 1 to 17, wherein the module (14) comprises a pair of third grooves (27).

## Patentansprüche

1. Motorradreifen (100), umfassend:
- einen Laufflächenring (8) umfassend eine Vielzahl von Nuten (18, 19), die radial außerhalb an einer Karkassenstruktur (2) angeordnet sind;
- wobei der Laufflächenring (8) ein Verhältnis der negativen und positiven Profilanteile von mehr als 4 % aufweist;
- wobei der Laufflächenring (8) ein Modul (14) umfasst, das entlang einer Umfangserstreckungsrichtung des Reifens repliziert wird, umfassend:
- ein erstes Paar von ersten Nuten (18), die in Bezug auf die Äquatorialebene (X-X) des Reifens entgegengesetzt schräg sind;
- ein zweites Paar von zweiten Nuten (19), die in Bezug auf die Äquatorialebene (X-X) des Reifens entgegengesetzt schräg sind;
- wobei die ersten und zweiten Nuten des ersten und des zweiten Paars so angeordnet sind, dass sie einen zentralen ringförmigen Abschnitt (s) über die Äquatorialebene (X-X) mit einem Verhältnis der negativen und positiven Profilanteile von weniger als 0,1 % bilden;
- wobei jede erste (18) und zweite Nut (19) ein proximales Ende (30, 31) umfasst, das an dem zentralen ringförmigen Abschnitt (s) angeordnet ist;
in jedem ersten Paar von ersten Nuten (18) die proximalen Enden (30) in Umfangsrichtung versetzt sind;
in jedem zweiten Paar von zweiten Nuten (19) die proximalen Enden (31) gegenseitig in Umfangsrichtung versetzt sind und relativ zu den proximalen Enden (39) des ersten Paars von ersten Nuten (18) in Umfangsrichtung versetzt sind;
- das erste Paar von ersten Nuten (18) in Umfangsrichtung auf das zweite Paar der zweiten Nuten (19) folgend angeordnet ist;
- die ersten (18) und die zweiten Nuten (19) sich axial von der Äquatorialebene (X-X) weg über zumindest 20 % der Breite L des Laufflächenrings (8) erstrecken;
**dadurch gekennzeichnet, dass** der Motorradreifen (100) ferner umfasst:
- die Karkassenstruktur (2) umfassend zumindest eine erste (2a) und zumindest eine zweite (2b) Karkassenlage, die radial übereinander gelagert sind, wobei jede aus Elastomermaterial besteht und eine Vielzahl von Verstärkungselementen (3) umfasst, die parallel zueinander angeordnet sind; wobei die zumindest eine erste (2a) und zumindest eine zweite (2b) Karkassenlage einander auf solche Weise überkreuzen, dass die Verstärkungselemente der ersten Karkassenlage (2a) relativ zu den Verstärkungselementen der zweiten Karkassenlage (2b) und zu einer Äquatorialebene (X-X) des Reifens schräg sind; und dass
- jede erste (18) oder zweite (19) Nut des ersten oder des zweiten Paars so angeordnet ist, dass sie zumindest ein erstes Segment (20, 23) entlang einer Richtung im Wesentlichen entsprechend der Richtung eines Verstärkungselements (3) einer der ersten (2a) und der zweiten (2b) Karkassenlage aufweist.

2. Motorradreifen (100) nach Anspruch 1, wobei in jedem Paar von ersten Nuten (13) eine erste Nut (18) so angeordnet ist, dass sie zumindest ein erstes Segment (20) entlang einer Richtung im Wesentlichen entsprechend der Richtung eines Verstärkungselements (3) einer ersten Karkassenlage (2a) aufweist, und die verbleibende erste Nut (18) so angeordnet ist, dass sie zumindest ein erstes Segment (20) entlang einer Richtung im Wesentlichen entsprechend der Richtung eines Verstärkungselements (3) einer zweiten Karkassenlage (2b) aufweist.

3. Motorradreifen (100) nach Anspruch 1 oder 2, wobei in jedem Paar von zweiten Nuten (19) eine zweite Nut (19) so angeordnet ist, dass sie zumindest ein erstes Segment (23) entlang einer Richtung im Wesentlichen entsprechend der Richtung eines Verstärkungselements (3) einer ersten Karkassenlage (2a) aufweist, und die verbleibende zweite Nut (19) so angeordnet ist, dass sie zumindest ein erstes Segment (23) entlang einer Richtung im Wesentlichen entsprechend der Richtung eines Verstärkungselements (3) einer zweiten Karkassenlage (2b) aufweist.

4. Motorradreifen (100) nach einem der Ansprüche 1 bis 3, wobei die ersten Nuten (18) des ersten Paars sich axial von der Äquatorialebene (X-X) des Reifens weg bewegend zumindest zwei im Wesentlichen gerade und aufeinanderfolgende Segmente (20, 21) umfassen, wobei das erste Segment (20) eine Schräge in Bezug auf die Äquatorialebene (X-X) aufweist, die einen Winkel α1 ≤ 40° bildet.

5. Motorradreifen (100) nach einem der Ansprüche 1 bis 4, wobei die zweiten Nuten (19) des zweiten Paars von zweiten Nuten (19) sich axial von der Äquatorialebene (X-X) des Reifens weg bewegend zumindest zwei im Wesentlichen gerade und im Wesentlichen aufeinanderfolgende Segmente (23, 24) umfassen, wobei das erste Segment (23) eine Schräge in Bezug auf die Äquatorialebene (X-X) aufweist, die einen Winkel β1 ≤ 40° bildet.

6. Motorradreifen (100) nach Anspruch 1, wobei die ersten Segmente (20, 23) der ersten (18) und der zweiten (19) Nuten von der Äquatorialebene (X-X) beabstandet sind und sich in einen radialen Bereich des Laufflächenrings (8) erstrecken, der im Fall eines Reifens, der an dem Hinterrad eines Motorrads montiert werden soll, durch radiale Winkel zwischen +/-5° und +/-15° definiert wird, und im Fall eines Reifens, der an dem Vorderrad eines Motorrads montiert werden soll, zwischen +/-5° und +/-45°.

7. Motorradreifen (100) nach einem der Ansprüche 5 oder 6, wobei die ersten Segmente (20, 23) der ersten (18) und der zweiten (19) Nut Schrägwinkel (α1, β1) in Bezug auf die Äquatorialebene (X-X) aufweisen, die kleiner als die jeweiligen Schrägwinkel (α2, β2) der zweiten Segmente (21, 24) der ersten (18) und der zweiten (19) Nuten sind; die zweiten Segmente (21, 24) eine Länge gemessen entlang ihrer Erstreckung aufweisen, die geringer als die Länge der ersten Segmente (20, 23) ist.

8. Motorradreifen (100) nach einem der vorhergehenden Ansprüche 1 bis 7, wobei die ersten (18) und die zweiten (19) Nuten ein drittes gerades Segment (22, 25) umfassen, das auf das zweite Segment (21, 24) folgend angeordnet ist; wobei das dritte Segment (22, 25) einen Schrägwinkel (α3, β3) in Bezug auf die Äquatorialebene (X-X) größer als der Schrägwinkel (α2, β2) des jeweiligen zweiten Segments (21, 24) aufweist.

9. Motorradreifen (100) nach einem der vorhergehenden Ansprüche 1 bis 8, wobei die ersten Nuten (18) des ersten Paars zueinander in Umfangsrichtung versetzt sind und die zweiten Nuten (19) des zweiten Paars zueinander in Umfangsrichtung versetzt und relativ zu den ersten Nuten (18) des ersten Paars in Umfangsrichtung versetzt sind.

10. Motorradreifen (100) nach einem der vorhergehenden Ansprüche 2 bis 9, wobei die proximalen Enden (30, 31) von der Äquatorialebene (X-X) um einen vorbestimmten Abstand d beabstandet sind, wobei die proximalen Enden (30, 31) der ersten Nuten (18) und der zweiten Nuten (19) an den Scheiteln einer unterbrochenen Linie angeordnet sind, die quer über die Äquatorialebene (X-X) angeordnet ist; wobei die unterbrochene Linie Segmente mit einer im Wesentlichen zickzackförmig verlaufenden Anordnung in Bezug auf die Äquatorialebene (X-X) aufweisen, wobei die Segmente entlang einer Richtung im Wesentlichen entsprechend der Richtung eines Verstärkungselements (3) einer von der ersten (2a) und der zweiten (2b) Karkassenlage angeordnet sind.

11. Motorradreifen (100) nach Anspruch 10, wobei jedes proximale Ende (30, 31) der ersten Nuten (18) und der zweiten Nuten (19) von der Äquatorialebene (X-X) um einen Abstand d gleich zumindest 5 % der Breite L des Laufflächenrings (8) beabstandet ist.

12. Motorradreifen (100) nach einem der vorhergehenden Ansprüche 1 bis 11, wobei die Verstärkungselemente (3) der ersten Lage (2a) so angeordnet sind, dass sie einen Winkel γ1 in Bezug auf die Äquatorialebene (X-X) in dem Bereich zwischen 10° und 40° bilden.

13. Motorradreifen (100) nach einem der vorhergehenden Ansprüche 1 bis 11, wobei die Verstärkungselemente (3) der zweiten Lage (2a) so angeordnet sind, dass sie einen Winkel γ2 in Bezug auf die Äquatorialebene (X-X) in dem Bereich zwischen 10° und 40° bilden.

14. Motorradreifen (100) nach einem der vorhergehenden Ansprüche 1 bis 13, wobei in jedem Modul (14) das zweite Segment (21) einer ersten Nut (18) eines ersten Paars von ersten Nuten (18) winkelmäßig von der Richtung der Verstärkungselemente der ersten Lage (2a) höchstens um einen Winkel kleiner als 20° abweicht, und das zweite Segment (21) der verbleibenden ersten Nut (18) des ersten Paars von ersten Nuten (18) winkelmäßig von der Richtung der Verstärkungselemente (3) der zweiten Lage (2b) höchstens um einen Winkel kleiner als 20° abweicht.

15. Motorradreifen (100) nach einem der vorhergehenden Ansprüche 8 bis 14, wobei in jedem Modul (14) das dritte Segment (22) einer ersten Nut (18) eines ersten Paars von ersten Nuten (18) winkelmäßig von der Richtung der Verstärkungselemente (3) der ersten Lage (2a) höchstens um einen Winkel von 80° und mindestens um einen Winkel von 15° abweicht, und das dritte Segment (22) der verbleibenden ersten Nut (18) des ersten Paars von ersten Nuten (18) winkelmäßig von der Richtung der Verstärkungselemente (3) der zweiten Lage (2b) höchstens um einen Winkel von 80° und mindestens um einen Winkel von 15° abweicht.

16. Motorradreifen (100) nach einem der vorhergehenden Ansprüche 1 bis 15, wobei in jedem Modul (14) das zweite Segment (24) einer zweiten Nut (19) eines zweiten Paars von zweiten Nuten (19) winkelmäßig von der Richtung der Verstärkungselemente (3) der ersten Lage (2a) höchstens um einen Winkel kleiner als 20° abweicht, und das zweite Segment (24) der verbleibenden zweiten Nut (19) des zweiten Paars winkelmäßig von der Richtung der Verstärkungselemente (3) der zweiten Lage (2b) höchstens um einen Winkel kleiner als 20° abweicht.

17. Motorradreifen (100) nach einem der vorhergehenden Ansprüche 8 bis 16, wobei in jedem Modul (14) das dritte Segment (25) einer zweiten Nut (19) eines zweiten Paars von zweiten Nuten (19) winkelmäßig von der Richtung der Verstärkungselemente (3) der ersten Lage (2a) höchstens um einen Winkel von 80° und mindestens um einen Winkel von 15° abweicht, und das dritte Segment (25) der verbleibenden zweiten Nut (19) des Paars winkelmäßig von der Richtung der Verstärkungselemente (3) der zweiten Lage (2b) höchstens um einen Winkel von 80° und mindestens um einen Winkel von 15° abweicht.

18. Motorradreifen (100) nach einem der vorhergehenden Ansprüche 1 bis 17, wobei das Modul (14) ein Paar von dritten Nuten (27) umfasst.

## Revendications

1. Pneu de motocycle (100) comprenant :
- une bande de roulement (8) comprenant une pluralité de rainures (18, 19) agencées radialement extérieurement à une structure de carcasse (2)
- ladite bande de roulement (8) ayant un rapport vide/solide supérieur à 4% ;
- ladite bande de roulement (8) comprenant un module (14) répliqué le long d'une direction de développement circonférentielle du pneu, comprenant :
- une première paire de premières rainures (18), inclinées de manière opposée par rapport au plan équatorial (X-X) du pneu ;
- une deuxième paire de deuxièmes rainures (19) inclinées de manière opposée par rapport au plan équatorial (X-X) du pneu ;
- les premières et deuxièmes rainures des première et deuxième paires étant agencées de manière à former une ou plusieurs partie (s) annulaire (s) centrale (s) dans le plan équatorial (X-X) ayant un rapport vide/solide inférieur à 0,1% ;
- chaque première (18) et deuxième rainure (19) comprenant une extrémité proximale (30, 31) agencée au niveau de la ou des plusieurs partie(s) annulaire(s) centrale(s) ;
dans chaque première paire de premières rainures (18) lesdites extrémités proximales (30) sont décalées de manière circonférentielle ;
dans chaque deuxième paire de deuxièmes rainures (19), lesdites extrémités proximales (31) sont mutuellement décalées de manière circonférentielle et décalées de manière circonférentielle par rapport auxdites extrémités proximales (30) de la première paire de premières rainures (18) ;
- la première paire de premières rainures (18) étant agencée séquentiellement de manière circonférentielle par rapport à la deuxième paire des deuxièmes rainures (19) ;
- les premières (18) et deuxièmes (19) rainures s'étendant axialement en s'éloignant du plan équatorial (X-X) sur au moins 20% de la largeur L de la bande de roulement (8) ;
**caractérisé en ce que** le pneu de motocycle (100) comprend en outre :
- la structure de carcasse (2) comprenant au moins un premier (2a) et au moins un deuxième (2b) plis de carcasse, superposés radialement, chacun étant réalisé en matériau élastomère et comprenant une pluralité d'éléments de renforcement (3) agencés parallèlement les uns aux autres ; lesdits au moins un premier (2a) et au moins un deuxième (2b) plis de carcasse étant mutuellement croisés de sorte que les éléments de renforcement du premier pli de carcasse (2a) soient inclinés par rapport aux éléments de renforcement du deuxième pli de carcasse (2b) et par rapport à un plan équatorial (X-X) du pneu ; et **en ce que**
- chaque première (18) ou deuxième (19) rainure de la première ou de la deuxième paire étant agencée de manière à avoir au moins un premier segment (20, 23) le long d'une direction correspondant sensiblement à la direction d'un élément de renforcement (3) de l'un des premier (2a) et deuxième (2b) plis de carcasse.

2. Pneu de motocycle (100) selon la revendication 1, dans lequel, dans chaque paire de premières rainures (18), une première rainure (18) est agencée de manière à avoir au moins un premier segment (20) le long d'une direction correspondant sensiblement à la direction d'un élément de renforcement (3) d'un premier pli de carcasse (2a) et la première rainure restante (18) est agencée de manière à avoir au moins un premier segment (20) le long d'une direction correspondant sensiblement à la direction d'un élément de renforcement (3) d'un deuxième pli de carcasse (2b) .

3. Pneu de motocycle (100) selon la revendication 1 ou 2, dans lequel dans chaque paire de deuxièmes rainures (19), une deuxième rainure (19) est agencée de manière à avoir au moins un premier segment (23) le long d'une direction correspondant sensiblement à la direction d'un élément de renforcement (3) d'un premier pli de carcasse (2a) et la deuxième rainure (19) restante est agencée de manière à avoir au moins un premier segment (23) le long d'une direction correspondant sensiblement à la direction d'un élément de renforcement (3) d'un deuxième pli de carcasse (2b).

4. Pneu de motocycle (100) selon l'une quelconque des revendications 1 à 3, dans lequel les premières rainures (18) de la première paire comprennent, en s'éloignant axialement du plan équatorial (X-X) du pneu, au moins deux segments (20, 21) sensiblement rectilignes et consécutifs, dans lequel le premier segment (20) a une inclinaison par rapport au plan équatorial (X-X) formant un angle α1 ≤ 40°.

5. Pneu de motocycle (100) selon l'une quelconque des revendications 1 à 4, dans lequel les deuxièmes rainures (19) de la deuxième paire de deuxièmes rainures (19) comprennent, en s'éloignant axialement du plan équatorial (X-X) du pneu, au moins deux segments (23, 24) sensiblement rectilignes et sensiblement consécutifs, dans lequel le premier segment (23) a une inclinaison par rapport au plan équatorial X-X formant un angle β1 ≤ 40°.

6. Pneu de motocycle (100) selon la revendication 1, dans lequel les premiers segments (20, 23) des premières (18) et deuxièmes (19) rainures sont espacés du plan équatorial (X-X) et s'étendent dans une région radiale de la bande de roulement (8) définie par des angles radiaux compris entre +/-5° et +/-15°, dans le cas d'un pneu destiné à être monté sur la roue arrière d'un motocycle, et entre +/-5° et +/-45°, dans le cas d'un pneu destiné à être monté sur la roue avant d'un motocycle.

7. Pneu de motocycle (100) selon l'une quelconque des revendications 5 ou 6, dans lequel les premiers segments (20, 23) des premières (18) et deuxièmes (19) rainures ont des angles d'inclinaison (α1, β1) par rapport au plan équatorial (X-X) qui sont inférieurs à des angles d'inclinaison (α2, β2) respectifs des deuxièmes segments (21, 24) des premières (18) et deuxièmes (19) rainures ; les deuxièmes segments (21, 24) ayant une longueur mesurée le long de leur extension inférieure à la longueur des premiers segments (20, 23).

8. Pneu de motocycle (100) selon l'une quelconque des revendications précédentes 1 à 7, dans lequel lesdites premières (18) et deuxièmes (19) rainures comprennent un troisième segment rectiligne (22, 25) agencé consécutivement au deuxième segment (21, 24) ; ledit troisième segment (22, 25) ayant un angle d'inclinaison (α3, β3) par rapport au plan équatorial (X-X) supérieur à l'angle d'inclinaison (α2, β2) du deuxième segment (21, 24) respectif.

9. Pneu de motocycle (100) selon l'une quelconque des revendications précédentes 1 à 8, dans lequel les premières rainures (18) de la première paire sont mutuellement décalées de manière circonférentielle et les deuxièmes rainures (19) de la deuxième paire sont mutuellement décalées de manière circonférentielle et décalées de manière circonférentielle par rapport aux premières rainures (18) de la première paire.

10. Pneu de motocycle (100) selon l'une quelconque des revendications précédentes 2 à 9, dans lequel lesdites extrémités proximales (30, 31) sont espacés du plan équatorial (X-X) d'une distance prédéterminée d, les extrémités proximales (30, 31) des premières rainures (18) et des deuxièmes rainures (19) étant agencées aux sommets d'une ligne discontinue agencée dans le plan équatorial (X-X) ; ladite ligne discontinue comprend des segments ayant un agencement sensiblement en zigzag par rapport au plan équatorial (X-X), lesdits segments étant agencés le long d'une direction correspondant sensiblement à la direction d'un élément de renforcement (3) de l'un des premier (2a) et deuxième (2b) plis de carcasse.

11. Pneu de motocycle (100) selon la revendication 10, dans lequel chaque extrémité proximale (30, 31) des premières rainures (18) et des deuxièmes rainures (19) est espacée du plan équatorial (X-X) d'une distance d, égale au moins à 5% de la largeur L de la bande de roulement (8).

12. Pneu de motocycle (100) selon l'une quelconque des revendications précédentes 1 à 11, dans lequel les éléments de renforcement (3) du premier pli (2a) sont agencés de manière à former un angle γ1 par rapport au plan équatorial (X-X) compris dans la plage allant de 10° à 40°.

13. Pneu de motocycle (100) selon l'une quelconque des revendications précédentes 1 à 11, dans lequel les éléments de renforcement (3) du deuxième pli (2b) sont agencés de manière à former un angle γ2 par rapport au plan équatorial X-X compris dans la plage allant de 10° à 40°.

14. Pneu de motocycle (100) selon l'une quelconque des revendications précédentes 1 à 13, dans lequel, dans chaque module (14), le deuxième segment (21) d'une première rainure (18) d'une première paire de premières rainures (18) s'écarte de manière angulaire de la direction des éléments de renforcement du premier pli (2a) au plus d'un angle inférieur à 20° et le deuxième segment (21) de la première rainure (18) restante de ladite première paire de premières rainures (18) s'écarte de manière angulaire de la direction des éléments de renforcement (3) du deuxième pli (2b) au plus d'un angle inférieur à 20°.

15. Pneu de motocycle (100) selon l'une quelconque des revendications précédentes 8 à 14, dans lequel, dans chaque module (14), le troisième segment (22) d'une première rainure (18) d'une première paire de premières rainures (18) s'écarte de manière angulaire de la direction des éléments de renforcement (3) du premier pli (2a) au plus d'un angle de 80° et au moins d'un angle de 15° et le troisième segment (22) de la première rainure restante (18) de ladite paire de premières rainures (18) s'écarte de manière angulaire de la direction des éléments de renforcement (3) du deuxième pli (2b) au plus d'un angle de 80° et au moins d'un angle de 15°.

16. Pneu de motocycle (100) selon l'une quelconque des revendications précédentes 1 à 15, dans lequel, dans chaque module (14), le deuxième segment (24) d'une deuxième rainure (19) d'une deuxième paire de deuxièmes rainures (19) s'écarte de manière angulaire de la direction des éléments de renforcement (3) du premier pli (2a) au plus d'un angle inférieur à 20° et le deuxième segment (24) de la deuxième rainure (19) restante de ladite deuxième paire s'écarte de manière angulaire de la direction des éléments de renforcement (3) du deuxième pli (2b) au plus d'un angle inférieur à 20°.

17. Pneu de motocycle (100) selon l'une quelconque des revendications précédentes 8 à 16, dans lequel dans chaque module (14) le troisième segment (25) d'une deuxième rainure (19) d'une deuxième paire de deuxièmes rainures (19) s'écarte de manière angulaire de la direction des éléments de renforcement (3) du premier pli (2a) au plus d'un angle de 80° et au moins d'un angle de 15° et le troisième segment (25) de la deuxième rainure (19) restante de ladite paire s'écarte de manière angulaire de la direction des éléments de renforcement (3) du deuxième pli (2b) au plus d'un angle de 80° et au moins d'un angle de 15°.

18. Pneu de motocycle (100) selon l'une quelconque des revendications précédentes 1 à 17, dans lequel le module (14) comprend une paire de troisièmes rainures (27).
